# FASCICULE DE BREVET EUROPEEN

(11) **EP 3 342 617 B1**
(45) Date de publication et mention de la délivrance du brevet: **05.02.2025**
(21) Numéro de dépôt: 17209736.2
(22) Date de dépôt: 21.12.2017
(51) Int. Cl.: B60K 15/04, B60K 15/035

(54) **TÊTE DE TUBULURE ET DISPOSITIF DE STOCKAGE COMPORTANT UNE TELLE TÊTE**
ROHRLEITUNGSKOPF UND LAGERVORRICHTUNG, DIE EINEN SOLCHEN KOPF UMFASST
FILLER TUBE HEAD AND STORAGE DEVICE COMPRISING SUCH A HEAD

(30) Priorité: 27.12.2016 FR 1663406
(43) Date de publication de la demande: 04.07.2018
(73) Titulaire: Plastic Omnium Advanced Innovation and Research, 1130 Bruxelles (BE)
(72) Inventeur: POIRIER, Sylvain, 60280 Margny Les Compiègne (FR)
(74) Mandataire: LLR

(56) Documents cités:
- DE-A1- 102015 204 925
- FR-A1- 3 015 909
- JP-A- 2010 188 867

## Description

La présente invention concerne une tête de tubulure et un dispositif de stockage comportant une telle tête de tubulure.

La tête de tubulure d'un réservoir de véhicule automobile comporte en général un dispositif de guidage destiné à recevoir un pistolet de distribution de carburant et garantir un bon remplissage en carburant du réservoir. Une tête de tubulure coiffe une tubulure d'acheminent de carburant.

Une tubulure actuelle avec échappement des gaz de réservoir est généralement munie d'une ligne de remplissage agencée pour acheminer le carburant jusqu'au réservoir et d'une ligne de dégazage agencée pour équilibrer la pression dans le réservoir quand le carburant est acheminé par la ligne de remplissage dans le réservoir. Ce type de tubulure est du type non-ORVR (abréviation venant des termes anglais « Onboard Refueling Vapor Recovery »), c'est-à-dire ne comportant pas d'absorbeur des vapeurs d'hydrocarbures lors du remplissage du réservoir.

Les pistolets de distribution de carburant ont habituellement une buse munie d'un système d'arrêt automatique de distribution évitant le trop plein du réservoir, c'est-à-dire qui évite que du carburant soit projeté en dehors de la tubulure. Plus précisément, ces systèmes d'arrêt automatique de distribution sont sensibles aux pertes de charge à l'extrémité de la buse du pistolet de distribution et se déclenchent à toute présence de liquide au niveau de ladite extrémité.

Toutefois, il a été remarqué que le remplissage pouvait parfois être difficile à cause du déclenchement intempestif du système d'arrêt automatique de distribution même en début de remplissage, c'est-à-dire sans que le réservoir soit rempli.

L'invention a pour but de remédier à ces inconvénients en fournissant une nouvelle tête de tubulure, destinée à recevoir un pistolet de distribution de fluide, qui garantit un remplissage sans déclenchement du système d'arrêt automatique de distribution avant le remplissage effectif du réservoir.

À cet effet, l'invention se rapporte à une tête de tubulure pour réservoir de fluide comprenant un évent agencé pour communiquer avec une ligne de dégazage, ladite tête de tubulure étant agencée pour recevoir une buse de distribution de fluide munie d'un système d'arrêt automatique de distribution, **caractérisée en ce** qu'elle comporte un dispositif de déviation d'un flux de la ligne de dégazage formant un canal entre la ligne de dégazage et l'évent pour que le flux provenant de la ligne de dégazage vers l'évent ne puisse pas être dirigé vers la buse de distribution afin que le flux provenant de la ligne de dégazage vers l'évent ne déclenche pas ledit système d'arrêt automatique lors du remplissage du réservoir au moyen de la buse de distribution et en ce que le dispositif de déviation comporte au moins un orifice de drainage agencé pour évacuer, vers le réservoir, tout liquide du flux vers l'évent.

Avantageusement selon l'invention, la tête de tubulure évite que le flux vers l'évent soit au moins partiellement condensé au contact du pistolet de distribution, qui est fréquemment à une température différente, au point qu'une goutte de condensation vienne être détectée par le système d'arrêt automatique de distribution comme du carburant remontant dans la ligne de remplissage. La tête de tubulure garantit ainsi un remplissage sans déclenchement du système d'arrêt automatique de distribution avant la fin du remplissage.

Toutefois, tout liquide présent dans le flux de l'évent peut, grâce à l'orifice de drainage, tout de même s'écouler, même pendant une phase de remplissage, vers le réservoir sans déclenchement du système d'arrêt automatique de distribution.

En outre, cela permet avantageusement d'éviter que l'utilisateur du pistolet de distribution soit tenté de ne pas enfoncer totalement le pistolet de distribution dans la tête de tubulure au point que le système d'arrêt automatique de distribution n'empêcherait plus que du carburant soit projeté en dehors de la tubulure.

L'invention peut également comporter l'une ou plusieurs des caractéristiques optionnelles suivantes, prises seules ou en combinaison.

Selon un premier mode de réalisation, le dispositif de déviation comporte un déflecteur formant le canal entre la ligne de dégazage et l'évent ce qui permet de dévier en permanence le flux de la ligne de dégazage vers l'évent.

Le déflecteur comporte l'orifice de drainage ce qui permet à tout liquide présent dans le flux de l'évent de s'écouler, même pendant une phase de remplissage, vers le réservoir sans déclenchement du système d'arrêt automatique de distribution.

Le déflecteur est en une seule pièce avec la tête de tubulure ce qui permet de diminuer le coût de la tête de tubulure.

Selon un deuxième mode de réalisation, le dispositif de déviation comporte une pièce fixe sur laquelle est articulée une pièce mobile, les pièces fixe et mobile étant agencées pour former le canal entre la ligne de dégazage et l'évent lors du remplissage du réservoir au moyen de la buse de distribution ce qui permet de dévier seulement lors d'une phase de remplissage le flux de la ligne de dégazage vers l'évent. Le reste du temps la ligne de dégazage peut communiquer avec la ligne de remplissage.

La pièce fixe et/ou la pièce mobile comporte l'orifice de drainage ce qui permet à tout liquide présent dans le flux de l'évent de s'écouler, même pendant une phase de remplissage, vers le réservoir sans déclenchement du système d'arrêt automatique de distribution.

L'orifice de drainage présente une section de passage inférieure à 0,3 cm² afin de permettre l'écoulement vers le réservoir de tout liquide présent dans le flux de l'évent.

Enfin, l'invention se rapporte à un dispositif de stockage pour un véhicule automobile comportant un réservoir destiné à stocker un fluide, une tubulure munie d'une première conduite agencée pour acheminer du fluide jusqu'au réservoir et d'une deuxième conduite agencée pour équilibrer la pression dans le réservoir quand un fluide est acheminé par la première conduite dans le réservoir, caractérisé **en ce que** le dispositif de stockage comporte en outre une tête de tubulure telle que présentée plus haut, la tête de tubulure étant montée partiellement dans la première conduite et l'évent étant raccordé à la deuxième conduite.

On va maintenant présenter des modes de réalisation de l'invention donnés à titre d'exemples non limitatifs et à l'appui des figures annexées sur lesquelles :
- la figure 1 est une vue schématique de dessus d'un véhicule automobile ;
- la figure 2 est une vue en perspective d'une tête de tubulure selon un premier mode de réalisation de l'invention ;
- la figure 3 est une vue schématique en coupe selon le plan III-III de la figure 2 ajoutée d'une ligne de dégazage et d'une ligne de remplissage ;
- la figure 4 est une vue schématique en coupe d'une tête de tubulure selon un deuxième mode de réalisation de l'invention dont le dispositif de déviation est en position désactivée ;
- la figure 5 est une vue schématique en coupe d'une tête de tubulure selon le deuxième mode de réalisation de l'invention dont le dispositif de déviation est en position activée.

Sur les différentes figures, les éléments identiques ou similaires portent les mêmes références. La description de leur structure et de leur fonction n'est donc pas systématiquement reprise.

L'invention se rapporte à un dispositif de stockage 1 pour un véhicule automobile 2 comportant un réservoir 3 destiné à stocker un fluide comme du carburant pour alimenter un moteur à explosion 4.

Un dispositif de stockage 1 comporte généralement une tubulure 5 munie d'une première conduite 7, parfois appelée ligne de remplissage, agencée pour acheminer le fluide comme du carburant jusqu'au réservoir 3. La tubulure 5 comporte en outre une deuxième conduite 9, parfois appelée ligne de dégazage, agencée pour équilibrer la pression dans le réservoir 3 quand un fluide est acheminé par la première conduite 7 dans le réservoir 3.

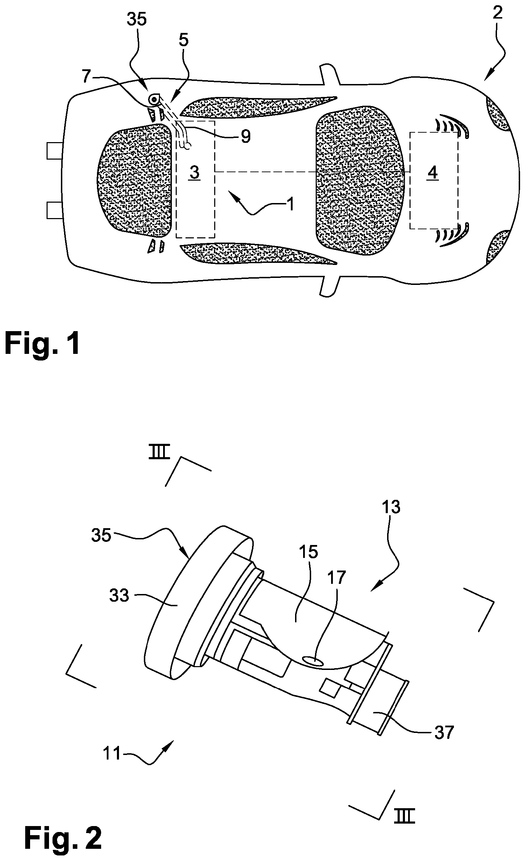

La tubulure 5 est généralement coiffée d'une tête de tubulure 11 destinée à recevoir un pistolet de distribution 25 de fluide et à garantir un bon remplissage du réservoir 3. Comme visible à la figure 2, la tête de tubulure 31 comporte un goulot 33 monté sur le véhicule automobile et comportant un élément de guidage 35 comme, par exemple, un cône percé à sa pointe et destiné à faciliter l'insertion d'un pistolet de distribution 25 de fluide et notamment sa buse 26. De plus, la tête de tubulure 31 comporte, en prolongement de l'élément de guidage 35, un réducteur 37 garantissant une position souhaitée du pistolet de distribution 25 dans la ligne de remplissage 7 et éviter, éventuellement, l'insertion d'une buse 26 d'un type différent de carburant que celui nécessaire au moteur à explosion 4.

Il a été constaté que le remplissage pouvait devenir difficile à cause du déclenchement intempestif du système d'arrêt automatique de distribution du pistolet de distribution 25 même en début de remplissage, c'est-à-dire sans que le réservoir 3 soit rempli. Après étude, il a pu être déterminé que ces arrêts intempestifs sont en fait causés par le flux B de la ligne de dégazage 9 relié à la tête de tubulure 31 qui est au moins partiellement condensé au contact du pistolet de distribution 25.

En effet, il est apparu que, quand la température du flux B de la ligne de dégazage 9 est différente de celle du pistolet de distribution 25, le flux B de la ligne de dégazage 9 peut être au moins partiellement condensé au contact du pistolet de distribution 25 au point qu'une goutte de condensation sur le pistolet de distribution 25 vienne à être détectée, par le système d'arrêt automatique de distribution, comme du fluide remontant dans la ligne de remplissage 7.

L'invention se rapporte donc à une tête de tubulure 11 qui comporte un évent 10 relié à la ligne de dégazage 9 et un dispositif de déviation 13 du flux B de la ligne de dégazage 9 afin que le flux C vers l'évent 10 ne déclenche pas le système d'arrêt automatique du pistolet de distribution 25 lors du remplissage du réservoir 3. Cette nouvelle tête de tubulure 11 garantit ainsi un remplissage sans déclenchement du système d'arrêt automatique de distribution avant la fin du remplissage même en cas de grande différence de température comme, par exemple, plus de 30 degrés.

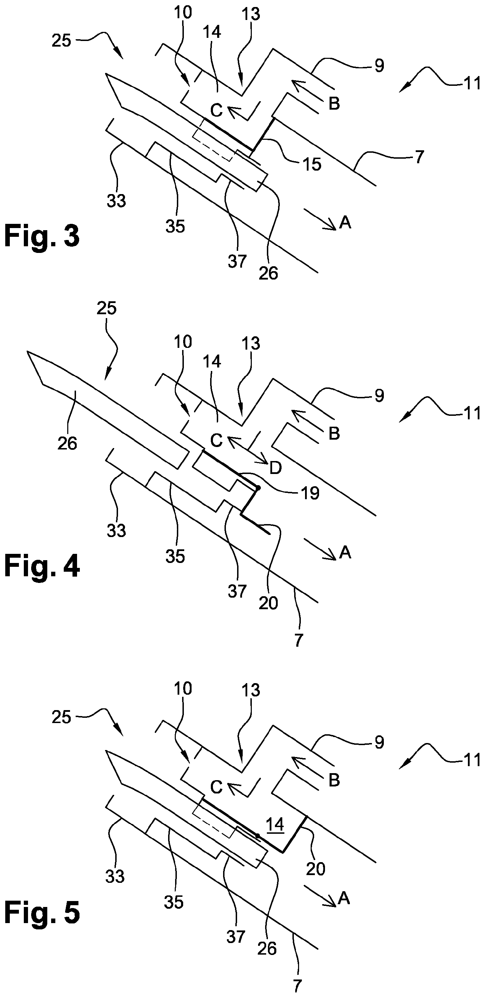

Selon un premier mode de réalisation illustré aux figures 2 et 3, le dispositif de déviation 13 comporte un déflecteur 15 formant un canal 14 entre la ligne de dégazage 9 et l'évent 10 de la tête de tubulure 11. Plus précisément, le flux B de la ligne de dégazage 9 va être dirigé selon le flux C dans le canal 14 vers l'évent 10 aménagé dans le goulot 33 afin d'être relâché dans l'air ambiant. On comprend donc que le flux C vers l'évent 10 provenant de la ligne de dégazage 9 ne peut plus être dirigé vers le pistolet de distribution 25. Par conséquent, aucune condensation ne peut générer de goutte sur la zone sensible du système d'arrêt automatique de distribution située à l'extrémité de sa buse 26 au niveau du réducteur 37 quand le flux A de remplissage est appliqué dans la ligne de remplissage 7.

Comme visible à la figure 2, avantageusement selon l'invention, le déflecteur 15 comporte en outre au moins un orifice de drainage 17 agencé pour évacuer, vers le réservoir 3, tout liquide du flux C de l'évent 10. En effet, comme visible à la figure 2, ledit au moins un orifice de drainage 17 étant situé latéralement par rapport au réducteur 37, tout liquide présent dans le flux C de l'évent 10 s'écoulera par gravité, à distance et, préférentiellement, en amont du réducteur 37. On comprend que le déflecteur 15 pourrait donc être en une seule pièce avec la tête de tubulure 11 comme, par exemple, venu de matière.

Selon un deuxième mode de réalisation illustré aux figures 4 et 5, le dispositif de déviation 13 comporte une pièce fixe 19 sur laquelle est articulée une pièce mobile 20. Comme visible à la figure 5, les pièces fixe 19 et mobile 20 sont agencées pour former un canal 14 entre la ligne de dégazage 9 et l'évent 10 de la tête de tubulure 11 lors du remplissage (flux A) du réservoir 3 au moyen du pistolet de distribution 25. Dans le deuxième mode de réalisation, en comparant les figures 4 et 5, on s'aperçoit que le buse 26 du pistolet de distribution 25 est utilisée pour basculer la partie mobile 20 entre une position basse de la figure 4 apte à laisser le canal 14 ouvert et permettre au flux B de la ligne de dégazage 9 d'être dirigé selon le flux C vers l'évent 10 au niveau du goulot 33 mais également selon un flux D vers la ligne de remplissage 7, et une position haute de la figure 5 dans laquelle la partie mobile 20, par contact avec l'extrémité de la buse 26, ferme le canal 14 en imposant au flux B de la ligne de dégazage 9 d'être exclusivement dirigé dans le canal 14 selon le flux C vers l'évent 10 au niveau du goulot 33.

Dans la position basse de la figure 4, la partie mobile 20, formé d'un tablier à section en L, repose contre l'extrémité du réducteur 37. De plus, l'articulation entre la partie fixe 19 et la partie mobile 20 forme un angle sensiblement droit.

Dans la position haute de la figure 5, la partie mobile 20 est plaquée par la buse 26 contre la surface interne de la ligne de remplissage 7. On comprend donc que la partie mobile 20 doit avoir une forme permettant de fermer le canal 14, c'est-à-dire une forme correspondant à la partie fixe 19 et la surface interne de la ligne de remplissage 7. De plus, l'articulation entre la partie fixe 19 et la partie mobile 20 forme un angle sensiblement égal à 180 degrés.

Bien entendu, de manière similaire au premier mode de réalisation, la pièce fixe 19 et/ou la pièce mobile 20 peut également comporter au moins un orifice de drainage 17 agencé pour évacuer, vers le réservoir 3, tout liquide du flux C vers l'évent 10 avec les mêmes résultats et avantages que le premier mode de réalisation. Enfin, quel que soit le mode de réalisation, chaque orifice de drainage 17 présente, préférentiellement, une section de passage inférieure à 0,3 cm².

L'invention n'est pas limitée aux modes de réalisation présentés et d'autres modes de réalisation apparaîtront clairement à l'homme du métier. Il est notamment possible d'envisager des variantes aux modes de réalisation ci-dessus. À titre d'exemple nullement limitatif, le bouchon du goulot 33 pourrait ainsi être, en variante, utilisé pour déplacer la partie mobile 20 du dispositif de déviation 13. La partie mobile 20 pourrait ainsi se translater par rapport à la partie fixe 19 grâce, par exemple, au contact du bouchon afin d'ouvrir le canal 14 quand le bouchon est vissé et de fermer le canal 14 quand le bouchon est retiré.

## Revendications

1. Tête de tubulure (11) pour réservoir (3) de fluide comprenant un évent (10) agencé pour communiquer avec une ligne de dégazage (9), ladite tête de tubulure étant agencée pour recevoir une buse (26) de distribution de fluide munie d'un système d'arrêt automatique de distribution, **caractérisée en ce qu'**elle comporte un dispositif de déviation (13) d'un flux (B) de la ligne de dégazage (9) formant un canal (14) entre la ligne de dégazage (9) et l'évent (10) pour que le flux (B, C) provenant de la ligne de dégazage (9) vers l'évent (10) ne puisse pas être dirigé vers la buse (26) de distribution afin que le flux (B, C) provenant de la ligne de dégazage (9) vers l'évent (10) ne déclenche pas ledit système d'arrêt automatique lors du remplissage du réservoir (3) au moyen de la buse (26) de distribution et **en ce que** le dispositif de déviation (13) comporte au moins un orifice de drainage (17) agencé pour évacuer, vers le réservoir (3), tout liquide du flux (C) vers l'évent (10).

2. Tête de tubulure (11) selon la revendication précédente, dans laquelle le dispositif de déviation (13) comporte un déflecteur (15) formant le canal entre la ligne de dégazage (9) et l'évent (10).

3. Tête de tubulure (11) selon la revendication précédente, dans laquelle le déflecteur (15) comporte l'orifice de drainage (17).

4. Tête de tubulure (11) selon la revendication 2 ou 3, dans laquelle le déflecteur (15) est en une seule pièce avec la tête (11) de tubulure (5).

5. Tête de tubulure (11) selon la revendication 1, dans laquelle le dispositif de déviation (13) comporte une pièce fixe (19) sur laquelle est articulée une pièce mobile (20), les pièces fixe (19) et mobile (20) étant agencées pour former le canal (14) entre la ligne de dégazage (9) et l'évent (10) lors du remplissage du réservoir (3) au moyen de la buse (26) de distribution.

6. Tête de tubulure (11) selon la revendication précédente, dans laquelle la pièce fixe (19) et/ou la pièce mobile (20) comporte l'orifice de drainage (17).

7. Tête de tubulure (11) selon la revendication 3 ou 6, dans laquelle ledit au moins un orifice de drainage (17) présente une section de passage inférieure à 0,3 cm².

8. Dispositif de stockage (1) pour un véhicule automobile (2) comportant un réservoir (3) destiné à stocker un fluide, une tubulure (5) munie d'une première conduite (7) agencée pour acheminer du fluide jusqu'au réservoir (3) et d'une deuxième conduite (9) agencée pour équilibrer la pression dans le réservoir (3) quand un fluide est acheminé par la première conduite (7) dans le réservoir (3), **caractérisé en ce que** le dispositif de stockage (1) comporte en outre une tête de tubulure (11) selon l'une quelconque des revendications précédentes, la tête de tubulure (11) étant montée partiellement dans la première conduite (7) et l'évent (10) étant raccordé à la deuxième conduite (9).

## Patentansprüche

1. Stutzenkopf (11) für einen Fluidbehälter (3) aufweisend eine Entlüftungsöffnung (10), die eingerichtet ist, mit einer Entgasungsleitung (9) in Verbindung zu stehen, wobei der Stutzenkopf eingerichtet ist, eine Düse (26) zur Abgabe von Fluid aufzunehmen, die mit einem System zum automatischen Abschalten der Abgabe versehen ist, **dadurch gekennzeichnet, dass** sie eine Umlenkvorrichtung (13) für einen Strom (B) aus der Entgasungsleitung (9) aufweist, die einen Kanal (14) zwischen der Entgasungsleitung (9) und der Entlüftungsöffnung (10) bildet, damit der Strom (B, C) aus der Entgasungsleitung (9) zu der Entlüftungsöffnung (10) nicht zu der Abgabedüse (26) geleitet werden kann, so dass der Strom (B, C) aus der Entgasungsleitung (9) zur Entlüftungsöffnung (10) das automatische Abschaltsystem beim Füllen des Behälters (3) mittels der Abgabedüse (26) nicht auslöst, und dass die Umlenkvorrichtung (13) mindestens eine Drainageöffnung (17) aufweist, die eingerichtet ist, jegliche Flüssigkeit aus dem Strom (C) zur Entlüftungsöffnung (10) in den Behälter (3) abzuleiten.

2. Stutzenkopf (11) nach dem vorhergehenden Anspruch, wobei die Umlenkvorrichtung (13) einen Deflektor (15) aufweist, der den Kanal zwischen der Entgasungsleitung (9) und der Entlüftungsöffnung (10) bildet.

3. Stutzenkopf (11) nach dem vorhergehenden Anspruch, wobei der Deflektor (15) die Drainageöffnung (17) aufweist.

4. Stutzenkopf (11) nach Anspruch 2 oder 3, wobei der Deflektor (15) einstückig mit dem Kopf (11) des Stutzens (5) ist.

5. Stutzenkopf (11) nach Anspruch 1, bei dem die Umlenkvorrichtung (13) ein festes Teil (19) aufweist, an dem ein bewegliches Teil (20) angelenkt ist, wobei das feste (19) und das bewegliche (20) Teil eingerichtet sind, beim Befüllen des Behälters (3) mit Hilfe der Abgabedüse (26) den Kanal (14) zwischen der Entgasungsleitung (9) und der Entlüftungsöffnung (10) zu bilden.

6. Stutzenkopf (11) nach dem vorhergehenden Anspruch, wobei das feste Teil (19) und/oder das bewegliche Teil (20) die Drainageöffnung (17) aufweist.

7. Stutzenkopf (11) nach Anspruch 3 oder 6, wobei die mindestens eine Drainageöffnung (17) einen Durchlassquerschnitt von weniger als 0,3 cm² aufweist.

8. Speichervorrichtung (1) für ein Kraftfahrzeug (2) mit einem Behälter (3) zum Speichern eines Fluids, einem Stutzen (5), der mit einer ersten Leitung (7) versehen ist, die eingerichtet ist, Fluid zum Behälter (3) zu leiten, und einer zweiten Leitung (9), die eingerichtet ist, den Druck im Behälter (3) auszugleichen, wenn Fluid durch die erste Leitung (7) in den Behälter (3) geleitet wird, **dadurch gekennzeichnet, dass** die Speichervorrichtung (1) ferner einen Stutzenkopf (11) nach einem der vorhergehenden Ansprüche aufweist, wobei der Stutzenkopf (11) teilweise in der ersten Leitung (7) angebracht ist und die Entlüftungsöffnung (10) mit der zweiten Leitung (9) verbunden ist.

## Claims

1. Tubing head (11) for fluid reservoir (3) comprising a vent (10) arranged to communicate with a venting line (9), said tubing head being arranged to receive a fluid dispensing nozzle (26) provided with an automatic dispensing shut-off system, **characterised in that** it comprises a device (13) for deflecting a flow (B) from the venting line (9) forming a channel (14) between the venting line (9) and the vent (10) so that the flow (B, C) from the venting line (9) to the vent (10) cannot be directed to the dispensing nozzle (26) permitting the flow (B, C) from the venting line (9) to the vent (10) does not cause said automatic shut-off system when filling the tank (3) by means of the dispensing nozzle (26) and wherein the deflecting device (13) has at least one drainage port (17) arranged for evacuating to the reservoir (3) any liquid existing in the flow (C) to the vent (10).

2. Tubing head (11) according to the preceding claim, wherein the deflecting device (13) has a deflector (15) forming the channel between the venting line (9) and the vent (10).

3. Tubing head (11) according to the preceding claim, wherein the baffle (15) comprises the drainage port (17).

4. Tubing head (11) according to claim 2 or 3, wherein the deflector (15) is in one piece with the tubing head (11).

5. Tubing head (11) according to claim 1, wherein the deflecting device (13) comprises a fixed part (19) on which a moving part (20) is hinged, the fixed (19) and moving parts (20) being arranged to form the channel (14) between the venting line (9) and the vent (10) when filling the tank (3) by means of the dispensing nozzle (26).

6. Tubing head (11) according to the preceding claim, wherein the fixed part (19) and/or moving part (20) comprises the drainage port (17).

7. Tubing head (11) according to claim 3 or 6, wherein said at least one drainage port (17) has a passage cross-section of less than 0.3 cm².

8. Storage device (1) for a motor vehicle (2) having a tank (3) for storing a fluid, a tubing (5) having a first line (7) arranged for conveying fluid to the tank (3) and a second line (9) arranged for equalizing the pressure in the tank (3) when a fluid is conveyed through the first line (7) into the tank (3), **characterised in that** the storage device (1) further comprises a tubing head (11) according to any one of the preceding claims, wherein the tubing head (11) is partially mounted in the first line (7) and the vent (10) is connected to the second line (9).
